# EUROPÄISCHE PATENTANMELDUNG

(11) **EP 4 089 783 A1**
(43) Veröffentlichungstag der Anmeldung: **16.11.2022**
(21) Anmeldenummer: 22170740.9
(22) Anmeldetag: 29.04.2022
(51) Int. Cl.: H01M 10/0525, H01M 10/42, H01M 10/44, H01M 10/54, H02J 7/00

(54) **ENTLADEVORRICHTUNG MIT EINEM KURZSCHLUSSELEMENT UND ENTLADEVERFAHREN**

(30) Priorität: 14.05.2021 DE 102021204914
(71) Anmelder: Robert Bosch GmbH, 70442 Stuttgart (DE)
(72) Erfinder: Court, Denis, 71404 Korb (DE); Krieger, Sebastian, 89073 Ulm (DE); Herrmann, Olaf, 70469 Stuttgart-Feuerbach (DE); Di Santo, Roman, 70565 Stuttgart (DE); Walter, Matthias, 70372 Stuttgart (DE)

(57) **Zusammenfassung**

Die vorgestellte Erfindung betrifft eine Entladevorrichtung (100) zum Entladen einer Vielzahl von Batteriezellen (105) mit unbekanntem Ladungszustand. Die Entladevorrichtung (100) umfasst ein Kontaktierungselement (101) zum elektrischen Kontaktieren jeweiliger Batteriezellen (105) der Vielzahl von Batteriezellen (105) und ein Kurzschlusselement (119), wobei das Kontaktierungselement (101) für jede einzelne Batteriezelle (105) der Vielzahl von Batteriezellen (105) einen elektrischen Kontakt (103) mit einem Rückflussverhinderer (107) umfasst, wobei jeder der Rückflussverhinderer (107) dazu konfiguriert ist, einen Rückfluss von aus jeweiligen Batteriezellen (105) in das Kontaktierungselement (101) geleiteter elektrischer Energie in eine dem jeweiligen Rückflussverhinderer (107) zugeordnete Batteriezelle (105) zu verhindern und, dadurch bedingt, die elektrische Energie unidirektional aus der jeweiligen Batteriezelle (105) abzuführen, wobei jeweilige elektrischer Kontakte (103) des Kontaktierungselements (101) in Fließrichtung der elektrischen Energie hinter den jeweiligen Rückflussverhinderern (107) elektrisch gekoppelt sind, und wobei das Kurzschlusselement (119) dazu konfiguriert ist, die Vielzahl von Batteriezellen (105) kurzzuschließen.

## Beschreibung

### Stand der Technik

Bei der Herstellung von elektrochemischen Batteriezellen fallen große Mengen an Batteriezellen als Produktionsabfall an. Zusätzlich wird im Sammelprozess von Altzellen eine große Menge an Batteriezellen gesammelt.

Ein Teil dieser Batteriezellen muss für einen Recyclingprozess entladen werden. Dabei wird i. d. R. jede einzelne Batteriezelle auf eine sehr niedere elektrische Spannung, meist nahe Null Volt entladen.

Hintergrund dieser Entladung ist ein Zerkleinerungsprozess, der zur Verwertung von Zellbestandteilen der Batteriezellen durchgeführt wird. Bei einem solchen Zerkleinerungsprozess kann es durch elektrochemische Reaktionsenergie zu unerwünschten chemischen Reaktionen kommen, welche eine Verarbeitungsanlage beschädigen können, chemische Nebenprodukte erzeugen, die aufwendig einzugrenzen sind und auch enthaltene Wertstoffe in ihrer chemischen Reinheit verändern, sodass die Wertigkeit des entstehenden Recyclingmaterials leidet.

Im Idealfall werden lediglich vollständig elektrochemisch entladene Batteriezellen in einen Zerkleinerungsprozess überführt.

Besonders hochenergetische Batteriezellen, wie bspw. Lithium-Ionen Batteriezellen, weisen meist einen undefinierten hohen Restenergiegehalt auf.

Eine Entladung einzelner Batteriezellen ist technisch schwierig, da Industrieumrichter i. d. R. erst ab einer hohen Spannung von bspw. 100 Volt funktionieren, die deutlich über der Spannung einer einzelnen Batteriezelle liegt.

I. d. R. sind bei zu recycelnden Batteriezellen ein Ladungsinhalt und eine Zellspannung sowie ein elektrisches Verhalten von Zellmaterial, wie bspw. ein Innenwiderstand und eine Doppelschichtkapazität, undefiniert. Aus diesem Grund ist es nicht möglich Batteriezellen einfach in Serie zu schalten und damit eine höhere Spannung zu erreichen, da bei einem nachfolgenden Entladevorgang einzelne Batteriezellen eine Nullladung erreichen würden und damit auf vielen Batteriezellen eine Restladung und damit Restspannung verbleiben würde.

Eine Parallelschaltung würde eine Spannungserhöhung nicht erfüllen und ist aufgrund der undefinierten Spannungslage der einzelnen Batteriezellen nicht ohne weiteres möglich.

Um eine Regeneration entladener Batteriezellen zu vermeiden, können die Batteriezellen kurzgeschlossen werden, sodass diese irreversibel beschädigt werden.

### Offenbarung der Erfindung

Im Rahmen der vorgestellten Erfindung werden eine Entladevorrichtung und ein Entladeverfahren zum Entladen einer Vielzahl von Batteriezellen mit unbekanntem Ladungszustand mit den Merkmalen der jeweiligen unabhängigen Patentansprüche vorgestellt. Weitere Merkmale und Details der Erfindung ergeben sich aus den jeweiligen Unteransprüchen, der Beschreibung und den Zeichnungen. Dabei gelten Merkmale und Details, die im Zusammenhang mit der erfindungsgemäßen Entladevorrichtung beschrieben sind, selbstverständlich auch im Zusammenhang mit dem erfindungsgemäßen Entladeverfahren und jeweils umgekehrt, sodass bezüglich der Offenbarung zu den einzelnen Erfindungsaspekten stets wechselseitig Bezug genommen wird bzw. werden kann.

Die vorgestellte Erfindung dient dazu, eine Möglichkeit zum Entladen einer Vielzahl von Batteriezellen mit unbekanntem Ladungszustand bereitzustellen. Insbesondere dient die vorgestellte Erfindung dazu, Batteriezellen zu entladen und eine Regeneration der Batteriezellen zu vermeiden.

In einem ersten Aspekt der vorgestellten Erfindung wird somit eine Entladevorrichtung zum Entladen einer Vielzahl von Batteriezellen mit unbekanntem Ladungszustand vorgestellt. Die Entladevorrichtung umfasst ein Kontaktierungselement zum elektrischen Kontaktieren jeweiliger Batteriezellen der Vielzahl Batteriezellen, und ein Kurzschlusselement. Das Kontaktierungselement umfasst für jede einzelne Batteriezelle der Vielzahl Batteriezellen einen elektrischen Kontakt mit einem Rückflussverhinderer, wobei jeder der Rückflussverhinderer dazu konfiguriert ist, einen Rückfluss von aus jeweiligen Batteriezellen in das Kontaktierungselement geleiteter elektrischer Energie in eine dem jeweiligen Rückflussverhinderer zugeordnete Batteriezelle zu verhindern und, dadurch bedingt, die elektrische Energie unidirektional aus der jeweiligen Batteriezelle abzuführen. Jeweilige elektrische Kontakte des Kontaktierungselements sind in Fließrichtung der elektrischen Energie hinter den jeweiligen Rückflussverhinderern elektrisch gekoppelt. Das Kurzschlusselement ist dazu konfiguriert, die Vielzahl Batteriezellen kurzzuschließen.

Unter einem Ladungszustand ist im Kontext der vorgestellten Erfindung eine von einer Batteriezelle bereitgestellte elektrische Spannung bzw. Stromstärke zu verstehen.

Unter einem elektrischen Kontakt ist im Kontext der vorgestellten Erfindung ein elektrisch leitfähiges Element, wie bspw. ein Draht oder ein Kabel, zu verstehen.

Unter einem Rückflussverhinderer ist im Kontext der vorgestellten Erfindung ein Bauteil zu verstehen, das einen Rückfluss von elektrischer Energie bzw. elektrischem Strom, der aus einer Batteriezelle strömt, zurück in die Batteriezelle verhindert. Entsprechend bewirkt ein Rückflussverhinderer ein unidirektionales Ausströmen von elektrischer Energie aus einer Batteriezelle und verhindert einen Austausch von elektrischer Energie zwischen verschiedenen Batteriezellen.

Die vorgestellte Entladevorrichtung basiert auf einem Kontaktierungselement mit einer Vielzahl elektrischer Kontakte und einem Kurzschlusselement, sodass mittels des Kontaktierungselements jeweilige Batteriezellen einer Vielzahl von Batteriezellen unabhängig voneinander bzw. jeweils einzeln von dem Kontaktierungselement elektrisch kontaktiert werden können. Dabei ermöglicht es die vorgestellte Entladevorrichtung die in den jeweiligen Batteriezellen gespeicherte elektrische Energie abzuführen und insbesondere jede der Batteriezellen in einen tiefenentladenen Zustand zu bringen. Entsprechend kann mittels der vorgestellten Entladevorrichtung eine Vielzahl von Batteriezellen gemeinsam bzw. in einem einzelnen gleichzeitigen Verarbeitungsschritt entladen werden.

Mittels des erfindungsgemäß vorgesehenen Kurzschlusselements ist es möglich, jeweilige durch die Entladevorrichtung entladene Batteriezellen kurzzuschließen, um diese irreversibel zu schädigen und, dadurch bedingt, eine Regenration der Batteriezellen nach der Entladung zu verhindern. Dazu kann das Kurzschlusselement verschiedene elektrische Pole jeweiliger Batteriezellen elektrisch koppeln oder einen Pol einer jeweiligen Batteriezelle mit einem Massepol der Entladevorrichtung elektrisch koppeln, sodass ein Kurzschluss auf Masse entsteht.

Jeweilige elektrische Kontakte des erfindungsgemäß vorgesehenen Kontaktierungselements können zur elektrischen Kontaktierung jeweiliger Batteriezellen eine elektrische Schnittstelle, wie bspw. eine Metallplatte oder eine Spannvorrichtung, aufweisen. Dazu kann die Spannvorrichtung ein mechanisches Federelement umfassen, mittels dessen ein jeweiliger elektrischer Kontakt an einer jeweiligen Batteriezelle zu verklemmen ist.

Durch die Vielzahl elektrischer Kontakte des Kontaktierungselements der vorgestellten Entladevorrichtung kann elektrische Energie bzw. elektrischer Strom aus jeweiligen Batteriezellen einer Vielzahl Batteriezellen unabhängig von jeweils anderen Batteriezellen der Vielzahl Batteriezellen abgeführt und bspw. einem Stromspeicher bzw. einem elektrischen Verbraucher zugeführt werden. Dabei wird durch die vorgestellte Entladevorrichtung aus den jeweiligen Batteriezellen strömende elektrische Energie in Strömungsrichtung hinter den erfindungsgemäß vorgesehenen Rückflussverhinderern abgeführt und bspw. in eine vorgegebene Spannung transformiert.

Durch die erfindungsgemäß vorgesehene Vielzahl an Rückflussverhinderern können jeweilige Batteriezellen einzeln bzw. unabhängig voneinander elektrisch entladen werden. Die Rückflussverhinderer verhindern einen Austausch von elektrischer Energie zwischen jeweiligen Batteriezellen, sodass von den jeweiligen Batteriezellen abgegebene elektrische Energie ausschließlich durch das Kontaktierungselement abgegeben und bspw. einem elektrischen Verbraucher zugeführt wird. Entsprechend kann ein Ladezustand verschiedener mit dem vorgestellten Entladesystem elektrisch gekoppelter Batteriezellen schwanken bzw. sich unterscheiden. Insbesondere ermöglichen die erfindungsgemäß vorgesehenen Rückflussverhinderer eine vollständige Entladung einzelner Batteriezellen während andere Batteriezellen noch entladen werden. Dazu können die Rückflussverhinderer verschiedene Batteriezellen bspw. voneinander galvanisch trennen.

Es kann vorgesehen sein, dass die jeweiligen Rückflussverhinderer des Kontaktierungselements als Dioden und/oder Transistoren ausgestaltet sind.

Das erfindungsgemäß vorgesehene Kurzschlusselement kann eine oder mehrere Platten aus einem elektrisch leitfähigen Material und/oder elektrische Kontakte zum Kontaktieren von elektrischen Polen jeweiliger Batteriezellen und/oder eines Massepols der Entladevorrichtung umfassen.

Insbesondere kann das Kurzschlusselement zwei Platten aus elektrisch leitfähigem Material umfassen, die mittels eines elektrischen Kopplers elektrisch koppelbar sind. Entsprechend kann eine erste Platte auf einer ersten Polseite der jeweiligen Batteriezellen und eine zweite Platte auf einer Gegenpolseite angeordnet werden, sodass bei einer elektrischen Kopplung der erste Platte und der zweiten Platte durch den elektrischen Koppler ein Kurzschluss entsteht.

Das Kontaktierungselement und das Kurzschlusselement können schwenkbar miteinander verbunden sein, sodass diese sich relativ zueinander auf vorgegebenen Trajektorien bewegen und ein Kurzschluss in dem Kontaktierungselement durch das Kurzschlusselement verhindert wird. Alternativ können das Kontaktierungselement und das Kurzschlusselement als integrales Bauteil ausgestaltet sein, sodass durch das Kurzschlusselement die elektrischen Kontakte des Kontaktierungselements mit entsprechenden elektrischen Gegenpolen jeweiliger Batteriezellen gekoppelt werden können, um einen Kurzschluss zu erzeugen.

Es kann weiterhin vorgesehen sein, dass die vorgestellte Entladevorrichtung eine Aufnahmevorrichtung umfasst, wobei die Aufnahmevorrichtung dazu konfiguriert ist, jeweilige in die Aufnahmevorrichtung eingebrachte Batteriezellen in einem räumlichen Muster anzuordnen, das einem räumlichen Muster der elektrischen Kontakte des Kontaktierungselements entspricht, sodass sämtliche in der Aufnahmevorrichtung angeordneten Batteriezellen durch das Kontaktierungselement elektrisch kontaktierbar sind.

Um eine schnelle und einfache Entladung einer Vielzahl von Batteriezellen zu ermöglichen, eignet sich eine Aufnahmevorrichtung, die die Batteriezellen in eine vorgegebene räumliche Anordnung drängt, sodass die Batteriezellen punktgenau auf jeweilige elektrische Kontakte des Kontaktierungselements bewegt werden können bzw. die elektrischen Kontakte des Kontaktierungselements punktgenau auf jeweilige Batteriezellen bewegt werden können. Dazu können die Aufnahmevorrichtung und das Kontaktierungselement relativ zueinander beweglich, insbesondere mittels eines Klappmechanismus, verbunden sein.

Es kann weiterhin vorgesehen sein, dass die Entladevorrichtung ein Anpresselement umfasst, das dazu konfiguriert ist, jeweilige in die Entladevorrichtung eingebrachte Batteriezellen in das räumliche Muster zu bewegen und eine elektrische Kontaktierung sämtlicher Batteriezellen durch das Kontaktierungselement zu ermöglichen.

Mittels eines Anpresselements kann eine exakte Positionierung jeweiliger Batteriezellen und/oder ein verlässlicher elektrischer Kontakt zu dem Kontaktierungselement sichergestellt werden. Dazu kann das Anpresselement bspw. ein relativ zu der Aufnahmevorrichtung bewegliches, insbesondere klappbares Gewicht und/oder eine Anzahl Federelemente umfassen, durch die jeweilige Batteriezellen auf jeweilige elektrische Kontakte des Kontaktierungselements gepresst werden, um eine verlässliche elektrische Kopplung bereitzustellen. Alternativ oder zusätzlich kann das Anpresselement, bspw. mittels einer Pumpe, einen Überdruck oder einen Unterdruck erzeugen, um die Batteriezellen und/oder das Kontaktierungselement auszurichten.

Es kann weiterhin vorgesehen sein, dass die Aufnahmevorrichtung eine Vielzahl von Aufnahmeträgern umfasst, die abwechselnd an dem Kontaktierungselement anzuordnen sind, um jeweilige einem Aufnahmeträger angeordnete Batteriezellen durch das Kontaktierungselement elektrisch zu kontaktieren.

Mittels verschiedener Aufnahmeträger kann eine Lagerung von Batteriezellen auf Vorrat erfolgen, die sukzessive der vorgestellten Entladevorrichtung zugeführt werden können, sodass eine dauerhafte Auslastung und ein entsprechend effizienter Betrieb der Entladevorrichtung sichergestellt werden kann. Ein Aufnahmeträger kann bspw. eine Schublade oder jeder weitere transportable Träger sein. Insbesondere kann ein Aufnahmeträger Aufnahmen für Batteriezellen umfassen, in die jeweilige Batteriezellen liegend bzw. stehend eingebracht und dort positionsfest gesichert werden können. Optional kann ein Aufnahmeträger eine geschlossene Hülle aufweisen, die bei Bedarf zum Be- oder Entladen geöffnet werden und, im geschlossenen Zustand, eine Umgebung gegen Brand- und Explosionsschäden durch brennende oder explodierende Batteriezellen schützt.

Es kann weiterhin vorgesehen sein, dass das Kurzschlusselement eine Vielzahl von Ausnehmungen zum Durchführen der elektrischen Kontakte des Kontaktierungselements umfasst.

Mittels einer Vielzahl von Ausnehmungen kann das Kurzschlusselement zwischen dem Kontaktierungselement und jeweiligen Batteriezellen angeordnet werden, sodass das Kurzschlusselement ohne Entnahme des Kontaktierungselements in der Entladevorrichtung verbleiben und dort zum Kurzschließen der Batteriezellen verwendet werden kann. Dazu kann das Kurzschlusselement bspw. zwischen einer von den Batteriezellen beabstandeten Position und einer die Batteriezellen kontaktierenden Position bewegt werden.

Es kann weiterhin vorgesehen sein, dass die jeweiligen Ausnehmungen einen Querschnitt aufweisen, der kleiner ist als ein Querschnitt eines elektrischen Pols einer jeweiligen Batteriezelle.

Mittels Ausnehmungen, die in ihrem Querschnitt kleiner sind als der Querschnitt eines elektrischen Pols einer jeweiligen Batteriezelle kann die Ausnehmung als Führung für einen durch die Ausnehmung durchgeführten elektrischen Kontakte des Kontaktierungselements wirken, sodass ein jeweiliger elektrischer Kontakt verlässlich einen entsprechenden Pol einer jeweiligen Batteriezelle kontaktiert.

Es kann weiterhin vorgesehen sein, dass das Kurzschlusselement zwischen einer ersten relativ zu dem Kontaktierungselement vorgegebenen Position und einer zweiten relativ zu dem Kontaktierungselement vorgegebenen Position schwenkbar ist.

Mittels eines zwischen zwei Positionen relativ zu dem Kontaktierungselement schwenkbaren Kurzschlusselements kann eine einfache, schnelle und präzise bzw. verlässliche elektrische Kopplung des Kurschlusselements mit jeweiligen Batteriezellen erreicht werden. Durch die zwei vorgegebenen Positionen bewegt sich das Kurzschlusselement auf einer vorgegebenen Trajektorie zwischen einer das Kurzschlusselement elektrisch isolierenden Position und einer das Kurzschlusselement elektrisch koppelnden Position.

Insbesondere in Kombination mit einer Aufnahmevorrichtung, die an einer vorgegebenen Position der Entladevorrichtung angeordnet ist, kann das Kurzschlusselement relativ zu der Aufnahmevorrichtung bewegt werden, sodass in die Aufnahmevorrichtung eingebrachte Batteriezellen derart ausgerichtet werden können, dass deren Pole sich an der zweiten Position befinden und das Kurzschlusselement die Batteriezellen elektrisch kontaktiert, wenn sich das Kurzschlusselement in der zweiten Position befindet.

Es kann weiterhin vorgesehen sein, dass das Kurzschlusselement eine Vielzahl elektrischer Kurzschlusskontakte zum elektrischen Koppeln des Kurzschlusselements mit jeweiligen Batteriezellen umfasst, wobei die elektrischen Kurzschlusskontakte zwischen einer ersten Position, in der die elektrischen Kurzschlusskontakte elektrisch von den jeweiligen Batteriezellen isoliert sind und ein einer zweiten Position, in der die elektrischen Kurzschlusskontakte mit den jeweiligen Batteriezellen elektrisch gekoppelt sind, bewegbar sind.

Mittels bewegbarer elektrischer Kurzschlusskontakte kann auf einfache Weise, bspw. mittels einer mechanischen Hebe-Senkvorrichtung, wie bspw. einem Hebel oder einem Schneckenantrieb, ein Kurzschluss erzeugt und wieder rückgängig gemacht werden.

Es kann weiterhin vorgesehen sein, dass das Kurzschlusselement einen Aktuator umfasst, mittels dessen das Kurzschlusselement und/oder die Kurzschlusskontakte zwischen der ersten Position und der zweiten Position bewegbar ist bzw. sind.

Mittels eines Aktuators, wie bspw. einem Elektromotor, der mit bspw. einer mechanischen Hebe-Senkvorrichtung, wie bspw. einem Hebel oder einem Schneckenantrieb mechanisch gekoppelt ist, kann eine automatische und kontrollierte Bewegung des Kurzschlusselements bzw. der Kurzschlusskontakte erreicht werden.

Es kann weiterhin vorgesehen sein, dass die Entladevorrichtung ein Kontrollgerät und einen Spannungssensor umfasst, wobei das Kontrollgerät dazu konfiguriert ist, den Aktuator zu aktivieren, um das Kurzschlusselement und/oder die Kurzschlusskontakte von der ersten Position in die zweite Position zu bewegen und jeweilige Batteriezellen kurzzuschließen, wenn eine von den Batteriezellen bereitgestellte Spannung unter einem vorgegebenen Kurzschlussschwellenwert liegt.

Mittels eines Kontrollgeräts zum Kontrollieren eines Aktuators zum Bewegen des Kurzschlusselements und/oder der Kurzschlusskontakte kann eine automatische Steuerung der Entladevorrichtung erreicht werden, bei der jeweilige Batteriezellen bis zu einem vorgegebenen Ladezustand entladen und danach kurzgeschlossen werden. Dabei können einzelne Batteriezellen zeitlich unabhängig voneinander kurzgeschlossen werden, indem einzelne Kurzschlusskontakte bewegt werden, oder sämtliche Batteriezellen gleichzeitig kurzgeschlossen werden, indem sämtliche Kurzschlusskontakte gemeinsam bewegt werden.

Es kann weiterhin vorgesehen sein, dass die Entladevorrichtung eine Kühlvorrichtung umfasst, die mit dem Kurzschlusselement und/oder den Batteriezellen thermisch gekoppelt ist, um bei einem Kurzschluss erzeugte Wärmeenergie aus der Entladevorrichtung abzuführen.

Eine Kühlvorrichtung, wie bspw. eine Platte, die von einem Kühlmedium, das mit einer Wärmesenke thermisch gekoppelt ist, umspült wird und/oder Kühlrippen umfasst, kann ein Aufheizen der Entladevorrichtung bzw. des Kurzschlusselements über eine kritische Temperatur verhindern.

Es kann weiterhin vorgesehen sein, dass das Kurzschlusselement eine Stromquelle umfasst, mittels derer elektrische Energie in einen durch das Kurzschlusselement kurzgeschlossenen Stromkreis einzubringen ist.

Mittels einer Stromquelle kann ein besonders starker Kurzschlussstrom bereitgestellt werden, der jeweilige Batteriezellen auch dann zerstört, wenn diese selbst keinen starken Kurzschlussstrom mehr bereitstellen können.

In einem zweiten Aspekt betrifft die vorgestellte Erfindung ein Entladeverfahren zum Entladen einer Vielzahl von Batteriezellen mit unbekanntem Ladungszustand. Das Entladeverfahren umfasst einen Anordnungsschritt, bei dem die Vielzahl Batteriezellen an einer möglichen Ausgestaltung der vorgestellten Entladevorrichtung angeordnet werden, einen Kontaktierungsschritt bei dem die Vielzahl von Batteriezellen durch ein Kontaktierungselement der Entladevorrichtung elektrisch kontaktiert werden, wobei das Kontaktierungselement für jede einzelne Batteriezelle der Vielzahl von Batteriezellen einen elektrischen Kontakt mit einem Rückflussverhinderer umfasst,
wobei der Rückflussverhinderer einen Rückfluss von in das Kontaktierungselement geleiteter elektrischer Energie in die jeweilige Batteriezelle verhindert und, dadurch bedingt, die elektrische Energie unidirektional aus der jeweiligen Batteriezelle abführt, und wobei jeweilige elektrische Kontakte des Kontaktierungselements in Fließrichtung der elektrischen Energie hinter den jeweiligen Rückflussverhinderern elektrisch gekoppelt werden. Weiterhin umfasst die Entladevorrichtung einen Kurzschlussschritt, bei dem die Vielzahl von Batteriezellen mittels eines Kurzschlusselements der Entladevorrichtung kurzgeschlossen werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein.

Es zeigen:
- Figur 1: eine schematische Darstellung einer möglichen Ausgestaltung der vorgestellten Entladevorrichtung,
- Figur 2: eine Seitenansicht der Entladevorrichtung gemäß Figur 1,
- Figur 3: die Entladevorrichtung gemäß Figur 1 in einem ersten Zustand,
- Figur 4: die Entladevorrichtung gemäß Figur 1 in einem zweiten Zustand,
- Figur 5: eine Draufsicht auf die Entladevorrichtung gemäß Figur 1,
- Figur 6: eine schematische Darstellung einer möglichen Ausgestaltung des vorgestellten Entladeverfahrens.

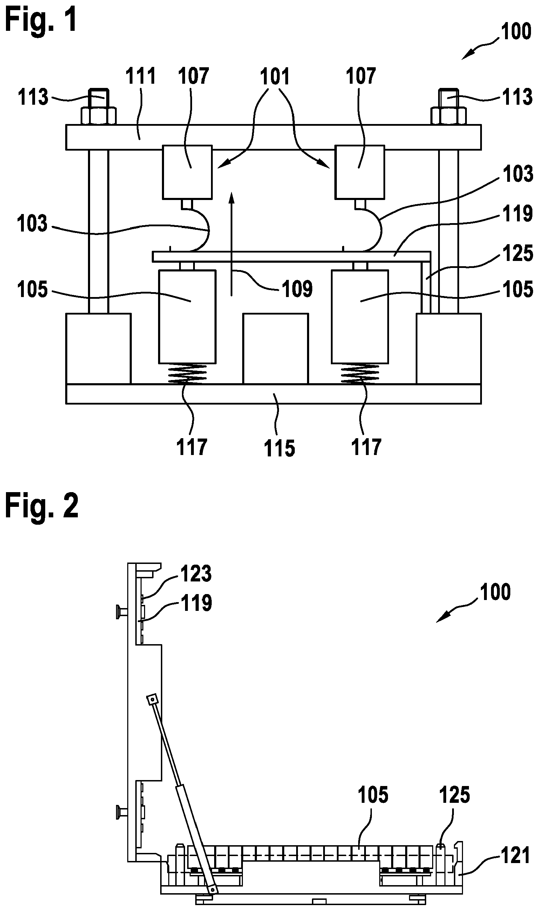

In Figur 1 ist eine Entladevorrichtung 100 dargestellt. Die Entladevorrichtung 100 umfasst ein Kontaktierungselement 101 mit elektrischen Kontakten 103 zur elektrischen Kontaktierung von Batteriezellen 105.

Die elektrischen Kontakte 103 umfassen jeweils einen Rückflussverhinderer 107, der einen Fluss von elektrischer Energie aus dem Kontaktierungselement 101 in Richtung jeweiliger Batteriezellen 105 verhindert und entsprechend eine unidirektionale Entladung, wie durch Pfeil 109 angedeutet, bedingt.

Die Rückflussverhinderer 107 sind vorliegend zwischen den jeweiligen Batteriezellen 105 und elektrischen Leitungen 111 zum Abführen von elektrischer Energie aus dem Kontaktierungselement 101 angeordnet.

Die elektrischen Leitungen 111 sind mit optionalen elektrischen Schnittstellen 113 zum elektrischen Koppeln der Entladevorrichtung mit bspw. einem elektrischen Verbraucher, wie bspw. einem Versorgungsnetz elektrisch gekoppelt.

Um ein Aufheizen der Entladevorrichtung 100 über einen kritischen Wert zu verhindern, umfasst die Entladevorrichtung 100 optional ein Kühlelement 115, wie bspw. eine Metallplatte, die von einem Kühlmedium umspült wird, das mit einer Wärmesenke in thermischem Kontakt steht.

Weiterhin sind in Figur 1 optionale Anpresselemente 117 in Form von mechanischen Federn dargestellt, mittels derer die Batteriezellen 105 auf die elektrischen Kontakte 103 des Kontaktierungselements 101 gepresst werden, um eine verlässliche elektrische Kopplung bereitzustellen.

Weiterhin ist in Figur 1 ein Kurzschlusselement 119 dargestellt, mittels dessen die Batteriezellen 105 kurzgeschlossen werden bzw. kurzschließbar sind. Durch den Kurzschluss werden die Batterien 105 irreversibel zerstört und können sich nicht regenerieren.

Zum Kurzschließen der Batteriezellen kann das Kurzschlusselement 119 die jeweiligen Pole der Batteriezellen 105 oder einen jeweiligen Pol der Batteriezellen mit einer Masse, insbesondere einer Masse eines Gehäuses der Entladevorrichtung 100 elektrisch koppeln.

Zum elektrischen Koppeln jeweiliger Batteriezellen 105 mit der Masse der Entladevorrichtung 100 umfasst die Entladevorrichtung 100 einen optionalen Massepunkt 125, mit dem das Kurzschlusselement 119 automatisch elektrisch koppelt, wenn dieses mit den Polen der jeweiligen Batteriezellen 105 elektrisch koppelt.

Zum Versorgen eines Wechselspannungsverbrauchers kann die Entladevorrichtung mit einem DC-AC Wandler verbunden werden oder optional einen DC-AC Wandler umfassen.

In Figur 2 ist die Entladevorrichtung 100 in einer Seitenansicht dargestellt. Hier ist gut erkennbar, dass das Kurzschlusselement 119 mit seinen Kurzschlusskontakten 123 schwenkbar mit einer Aufnahmevorrichtung 121 der Entladevorrichtung gekoppelt ist, sodass das Kurzschlusselement 119 auf einer vorgegebenen Trajektorie zwischen zwei vorgegebenen Endstellungen relativ zu der Aufnahmevorrichtung 121 und den darin angeordneten Batteriezellen 105 beweglich ist.

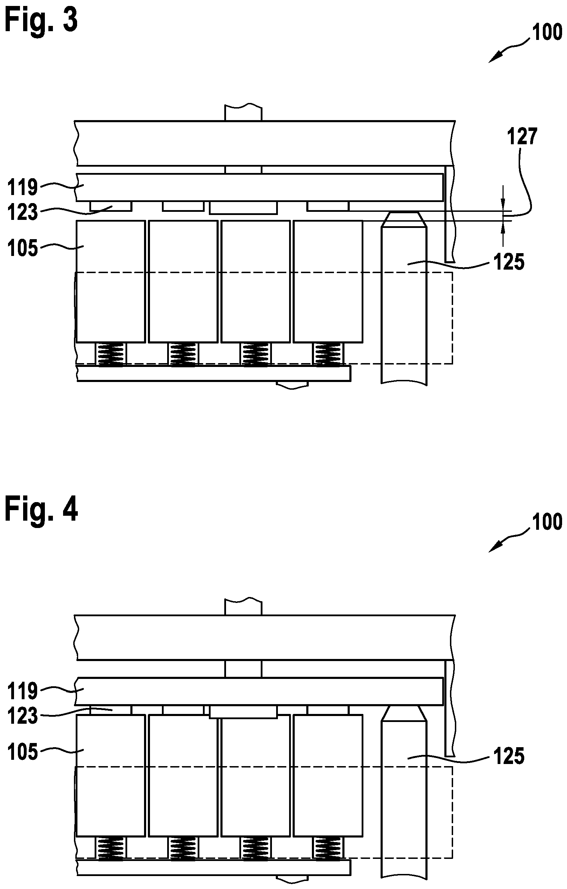

In Figur 3 ist eine Ausführungsform der Entladevorrichtung 100 in einem Zustand dargestellt, in dem Kurzschlusskontakte 123 des Kurzschlusselements 119 beabstandet von jeweiligen Polen der Batteriezellen 105 sind, sodass die Batteriezellen 105 nicht kurzgeschlossen sind und bspw. über das Kontaktierungselement 101 entladen werden.

Vorliegend beträgt ein Abstand der Kurzschlusskontakte 123 des Kurzschlusselements 119 bspw. 10 Millimeter, wie durch Pfeile 127 angedeutet.

In Figur 4 ist das Kurzschlusselement 119 in elektrischem Kontakt mit den Batteriezellen 105 und einem Massepunkt 125 der Entladevorrichtung 100, sodass die Batteriezellen 105 auf Masse kurzgeschlossen sind. Entsprechend werden die Batteriezellen 105 durch das Kurzschlusselement 119 unbrauchbar gemacht und können einem Weiterverarbeitungsschritt, wie bspw. einem Zerkleinerer gefahrlos zugeführt werden.

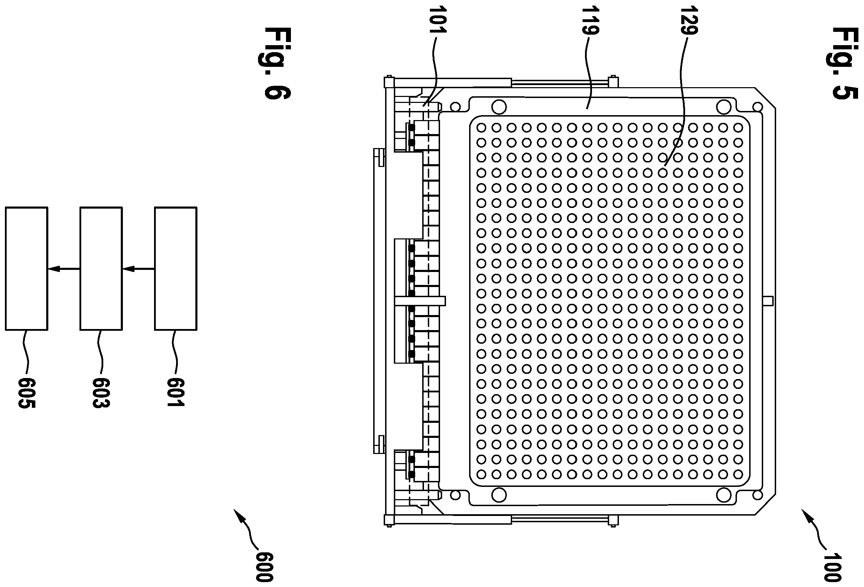

In Figur 5 ist die Entladevorrichtung 100 in einer Draufsicht dargestellt. Hier ist erkennbar, dass das Kurzschlusselement 119 eine Vielzahl Ausnehmungen 129 zum Durchführen von elektrischen Kontakten des Kontaktierungselements 101 umfasst. Entsprechend kann das Kurzschlusselement 119 unabhängig von dem Kontaktierungselement 101 an der Entladevorrichtung 100 bewegt werden, sodass ein Aus- und Einbau des Kurzschlusselements 119 bzw. ein Tausch des Kontaktierungselements 101 gegen das Kurzschlusselement 119 entfallen kann. Vielmehr ermöglichen die Ausnehmungen 129 einen parallelen bzw. zeitgleichen Verbleib des Kurzschlusselements 119 und des Kontaktierungselements 101 in bzw. an der Entladevorrichtung 100.

In Figur 6 ist ein Entladeverfahren 600 dargestellt. Das Entladeverfahren 600 umfasst einen Anordnungsschritt 601, bei dem die Vielzahl Batteriezellen in einer möglichen Ausgestaltung der vorgestellten Entladevorrichtung angeordnet werden, einen Kontaktierungsschritt 603 bei dem die Vielzahl Batteriezellen durch ein Kontaktierungselement der Entladevorrichtung elektrisch kontaktiert werden, wobei das Kontaktierungselement für jede einzelne Batteriezelle der Vielzahl Batteriezellen einen elektrischen Kontakt mit einem Rückflussverhinderer umfasst, wobei der Rückflussverhinderer einen Rückfluss von in das Kontaktierungselement geleiteter elektrischer Energie in die jeweilige Batteriezelle verhindert und, dadurch bedingt, die elektrische Energie unidirektional aus der jeweiligen Batteriezelle abführt, und wobei jeweilige elektrische Kontakte des Kontaktierungselements in Fließrichtung der elektrischen Energie hinter den jeweiligen Rückflussverhinderern elektrisch gekoppelt werden. Weiterhin umfasst das Entladeverfahren 100 einen Kurzschlussschritt 605, bei dem die Vielzahl Batteriezellen mittels eines Kurzschlusselements der Entladevorrichtung kurzgeschlossen werden.

## Patentansprüche

1. Entladevorrichtung (100) zum Entladen einer Vielzahl von Batteriezellen (105) mit unbekanntem Ladungszustand,
wobei die Entladevorrichtung (100) umfasst:
- ein Kontaktierungselement (101) zum elektrischen Kontaktieren jeweiliger Batteriezellen (105) der Vielzahl von Batteriezellen (105),
- ein Kurzschlusselement (119),
wobei das Kontaktierungselement (101) für jede einzelne Batteriezelle (105) der Vielzahl von Batteriezellen (105) einen elektrischen Kontakt (103) mit einem Rückflussverhinderer (107) umfasst,
wobei jeder der Rückflussverhinderer (107) dazu konfiguriert ist, einen Rückfluss von aus jeweiligen Batteriezellen (105) in das Kontaktierungselement (101) geleiteter elektrischer Energie in eine dem jeweiligen Rückflussverhinderer (107) zugeordnete Batteriezelle (105) zu verhindern und, dadurch bedingt, die elektrische Energie unidirektional aus der jeweiligen Batteriezelle (105) abzuführen,
wobei jeweilige elektrischer Kontakte (103) des Kontaktierungselements (101) in Fließrichtung der elektrischen Energie hinter den jeweiligen Rückflussverhinderern (107) elektrisch gekoppelt sind, und
wobei das Kurzschlusselement (119) dazu konfiguriert ist, die Vielzahl Batteriezellen kurzzuschließen.

2. Entladevorrichtung (100) nach Anspruch 1,
**dadurch gekennzeichnet,**
**dass** das Kurzschlusselement (119) eine Vielzahl von Ausnehmungen (129) zum Durchführen der elektrischen Kontakte (103) des Kontaktierungselements (101) umfasst.

3. Entladevorrichtung (100) nach Anspruch 2,
**dadurch gekennzeichnet,**
**dass** die jeweiligen Ausnehmungen (129) einen Querschnitt aufweisen, der kleiner ist als ein Querschnitt eines elektrischen Pols einer jeweiligen Batteriezelle (105).

4. Entladevorrichtung (100) nach einem der voranstehenden Ansprüche, **dadurch gekennzeichnet,**
**dass** das Kurzschlusselement (119) zwischen einer ersten, relativ zu dem Kontaktierungselement (101) vorgegebenen Position, und einer zweiten, relativ zu dem Kontaktierungselement (101) vorgegebenen Position, schwenkbar ist.

5. Entladevorrichtung (100) nach einem der voranstehenden Ansprüche **dadurch gekennzeichnet,**
**dass** das Kurzschlusselement (119) eine Vielzahl elektrischer Kurzschlusskontakte (123) zum elektrischen Koppeln des Kurzschlusselements (119) mit jeweiligen Batteriezellen (105) umfasst, wobei die elektrischen Kurzschlusskontakte (123) zwischen einer ersten Position, in der die elektrischen Kurzschlusskontakte elektrisch von den jeweiligen Batteriezellen (105) isoliert sind und ein einer zweiten Position, in der die elektrischen Kurzschlusskontakte (123) mit den jeweiligen Batteriezellen (105) elektrisch gekoppelt sind, bewegbar sind.

6. Entladevorrichtung (100) nach Anspruch 4 oder 5,
**dadurch gekennzeichnet,**
**dass** das Kurzschlusselement (119) einen Aktuator umfasst, mittels dessen das Kurzschlusselement (119) und/oder die Kurzschlusskontakte (123) zwischen der ersten Position und der zweiten Position bewegbar ist bzw. sind.

7. Entladevorrichtung (100) nach Anspruch 6,
**dadurch gekennzeichnet,**
**dass** die Entladevorrichtung (100) ein Kontrollgerät und einen Spannungssensor umfasst,
wobei das Kontrollgerät dazu konfiguriert ist, den Aktuator zu aktivieren, um das Kurzschlusselement (119) und/oder die Kurzschlusskontakte (123) von der ersten Position in die zweite Position zu bewegen, und jeweilige Batteriezellen (105) kurzzuschließen, wenn eine von den Batteriezellen (105) bereitgestellte Spannung unter einem vorgegebenen Kurzschlussschwellenwert liegt.

8. Entladevorrichtung (100) nach Anspruch 7,
**dadurch gekennzeichnet,**
**dass** der Aktuator dazu konfiguriert ist, das Kontaktierungselement (101) zunächst in eine Position zu bewegen, in der die elektrischen Kontakte (103) des Kontaktierungselements (101) von den Batteriezellen elektrisch isoliert sind, und anschließend das Kurzschlusselement (119) und/oder die Kurzschlusskontakte (123) von der ersten Position in die zweite Position zu bewegen.

9. Entladevorrichtung (100) nach einem der voranstehenden Ansprüche, **dadurch gekennzeichnet,**
**dass** die Entladevorrichtung (100) eine Kühlvorrichtung umfasst, die mit dem Kurzschlusselement (119) und/oder den Batteriezellen (105) thermisch gekoppelt ist, um bei einem Kurzschluss erzeugte Wärmeenergie aus der Entladevorrichtung (100) abzuführen.

10. Entladevorrichtung (100) nach einem der voranstehenden Ansprüche, **dadurch gekennzeichnet,**
**dass** das Kurzschlusselement (119) eine Stromquelle umfasst, mittels derer elektrische Energie in einen durch das Kurzschlusselement (119) kurzgeschlossenen Stromkreis einzubringen ist.

11. Entladeverfahren (600) zum Entladen einer Vielzahl von Batteriezellen (105) mit unbekanntem Ladungszustand,
wobei das Entladeverfahren umfasst:
- Anordnen (601) der Vielzahl von Batteriezellen (105) in einer Entladevorrichtung (100) nach einem der Ansprüche 1 bis 10,
- Kontaktieren (603) der Vielzahl Batteriezellen (105) durch ein Kontaktierungselement (101),
wobei das Kontaktierungselement (101) für jede einzelne Batteriezelle (105) der Vielzahl Batteriezellen (105) einen elektrischen Kontakt (103) mit einem Rückflussverhinderer (107) umfasst,
wobei der Rückflussverhinderer (107) einen Rückfluss von in das Kontaktierungselement (101) geleiteter elektrischer Energie in die jeweilige Batteriezelle (105) verhindert und, dadurch bedingt, die elektrische Energie unidirektional aus der jeweiligen Batteriezelle (105) abführt, und
wobei jeweilige elektrische Kontakte (103) des Kontaktierungselements (101) in Fließrichtung der elektrischen Energie hinter den jeweiligen Rückflussverhinderern (107) elektrisch gekoppelt werden,
- Kurzschließen (605) der Vielzahl Batteriezellen (105) mittels eines Kurzschlusselements (119).
